# FASCICULE DE BREVET EUROPEEN

(11) **EP 3 125 732 B1**
(45) Date de publication et mention de la délivrance du brevet: **27.01.2021**
(21) Numéro de dépôt: 15721766.2
(22) Date de dépôt: 31.03.2015
(51) Int. Cl.: A47J 43/07, A47J 37/07

(54) **APPAREIL ELECTROMENAGER AVEC UN ESPACE INTERNE DE RANGEMENT DU CORDON D'ALIMENTATION ELECTRIQUE**
HAUSHALTSGERÄT MIT EINEM INNENRAUM ZUR AUFBEWAHRUNG DES STROMKABELS
HOUSEHOLD APPLIANCE WITH AN INTERNAL SPACE FOR STORING THE POWER CORD

(30) Priorité: 03.04.2014 FR 1452991; 11.03.2015 FR 1552006
(43) Date de publication de la demande: 08.02.2017
(73) Titulaire: SEB S.A., 69130 Ecully (FR)
(72) Inventeur: LAFOND, Jean-Marie, F-65420 Ibos (FR); PEYRAS, Lionel, F-65100 Lourdes (FR)
(74) Mandataire: SEB Développement
(86) Numéro de dépôt international: PCT/FR2015/050838
(87) Numéro de publication internationale: WO 2015/150698

(56) Documents cités:
- EP-A1- 2 679 123
- DE-U1- 20 116 107
- US-A- 5 533 797

## Description

La présente invention concerne de manière générale un appareil électroménager muni d'un cordon d'alimentation électrique et présentant un espace interne de rangement pour le cordon d'alimentation électrique.

Il est connu du document EP1138238 un boîtier de robot culinaire présentant un espace interne de rangement pour un cordon d'alimentation électrique. Toutefois le cordon d'alimentation électrique est introduit tangentiellement dans l'espace interne de rangement et l'espace interne de rangement comporte un élément de changement de direction situé à la suite de l'orifice d'introduction. Ainsi cet élément de changement de direction va dévier la majeure partie de la longueur du cordon d'alimentation électrique introduit dans l'espace interne de rangement. Un inconvénient de cette réalisation réside dans l'effort nécessaire pour pousser le cordon à l'intérieur de l'espace interne de rangement. De plus l'espace interne de rangement est défini par un capot rapporté sur une base du boîtier.

Un appareil selon le préambule de la revendication 1 est connu du document DE 2 0116107 U.

Un but de la présente invention est de proposer un appareil électroménager comportant un espace interne de rangement pour le cordon d'alimentation électrique, dans lequel le rangement du cordon d'alimentation électrique soit facilité.

Un autre but de la présente invention est de proposer un appareil électroménager comportant un espace interne de rangement pour le cordon d'alimentation électrique, dans lequel la réalisation de l'espace interne de rangement du cordon d'alimentation électrique soit simplifiée.

Ces buts sont atteints avec un appareil électroménager, notamment un appareil électroménager de préparation culinaire, comportant un boîtier présentant une enveloppe extérieure, un cordon d'alimentation électrique monté dans le boîtier et présentant une portion s'étendant hors de l'enveloppe extérieure, un espace interne de rangement étant agencé à l'intérieur du boîtier pour loger au moins partiellement la portion du cordon d'alimentation électrique s'étendant hors de l'enveloppe extérieure, le boîtier comprenant un élément de boîtier formant une partie de l'enveloppe extérieure, l'élément de boîtier comportant un passage de sortie par lequel le cordon d'alimentation électrique sort librement du boîtier, du fait que le passage de sortie est agencé sous une face inférieure d'appui de l'élément de boîtier, que la face inférieure d'appui comporte au moins une échancrure latérale mettant en communication le passage de sortie avec l'extérieur lorsque la face inférieure d'appui repose sur un plan d'appui, et que l'espace interne communique par au moins un passage intermédiaire avec un compartiment principal agencé dans le boîtier et logeant un moteur électrique.

Le passage de sortie peut ainsi être utilisé pour la ventilation du moteur électrique.

Avantageusement alors, la plus petite section du passage de sortie est supérieure à l'épaisseur d'une paroi externe de l'élément de boîtier séparant l'espace interne de l'enveloppe extérieure et s'étendant jusqu'au passage de sortie, et l'espace interne s'étend à partir du passage de sortie dans une direction principalement parallèle à l'enveloppe extérieure.

Alors, selon une forme de réalisation avantageuse, le passage de sortie est agencé entre des pieds d'appui du boîtier.

Avantageusement encore, le cordon d'alimentation électrique est retenu par l'élément de boîtier en regard du passage de sortie. Cette disposition permet de faciliter l'introduction du cordon d'alimentation électrique dans l'espace interne à partir de l'extrémité du cordon d'alimentation électrique reliée au boîtier.

Avantageusement encore, l'élément de boîtier comporte au moins une paroi interne délimitant partiellement l'espace interne. Cette disposition permet de simplifier la construction du boîtier.

Avantageusement alors, la ou les paroi(s) interne(s) s'étend(ent) au dessus du passage de sortie. Cette disposition permet d'éviter l'utilisation d'une pièce rapportée pour former un orifice d'introduction débouchant par le passage de sortie.

Avantageusement encore, la ou les paroi(s) interne(s) ménage(nt) un passage interne pour le cordon d'alimentation électrique. Cette disposition permet de faire déboucher le cordon d'alimentation électrique en regard du passage de sortie.

Avantageusement alors, la section du passage de sortie est supérieure à la section du passage interne. Le passage interne peut ainsi retenir le cordon d'alimentation électrique alors que le passage de sortie permet une introduction libre du cordon d'alimentation électrique dans l'espace interne de rangement.

Selon un mode de réalisation avantageux, l'élément de boîtier forme une coque logeant au moins partiellement l'espace interne. Cette disposition permet d'utiliser les espaces libres à l'intérieur de la coque.

Avantageusement alors, la coque présente un bord latéral délimitant une cavité interne et la face inférieure d'appui appartient à une face externe de la coque. La coque constitue ainsi la partie inférieure du boîtier.

Avantageusement encore, la ou les paroi(s) interne(s) est/sont agencée(s) à l'intérieur de la cavité interne, et l'espace interne débouche en regard de l'ouverture de la cavité interne délimitée par le bord latéral. Cette disposition permet de faciliter la réalisation de la coque par moulage.

Avantageusement encore, l'élément de boîtier comporte une rainure externe de coincement pour maintenir le cordon d'alimentation électrique. Cette disposition permet de simplifier l'utilisation de l'appareil en permettant à l'utilisateur de choisir la longueur de la section libre du cordon d'alimentation électrique.

Avantageusement alors, la rainure externe de coincement s'étend au moins partiellement hors de la face inférieure d'appui de l'élément de boîtier. Cette disposition permet à l'utilisateur de mieux visualiser l'ancrage de la section libre du cordon d'alimentation électrique.

Avantageusement encore, la rainure externe de coincement débouche dans le passage de sortie. Cette disposition permet de relier l'espace interne de rangement à la rainure externe de coincement sans sortir de l'enveloppe extérieure du boîtier.

Avantageusement encore, la rainure externe de coincement est agencée à l'opposé de l'espace interne. Cette disposition permet d'éviter une courbure du cordon d'alimentation électrique à proximité de la rainure externe de coincement, susceptible de favoriser la sortie du cordon d'alimentation électrique de la rainure externe de coincement.

L'invention sera mieux comprise à l'étude d'un exemple de réalisation, pris à titre nullement limitatif, illustré dans les figures annexées, dans lesquelles :
- la figure 1 est une vue en élévation et en coupe d'un exemple de réalisation d'un boîtier d'appareil électroménager de préparation culinaire selon l'invention, comportant un élément de boîtier présentant un passage de sortie pour un cordon d'alimentation électrique,
- les figures 2 et 3 sont deux vues frontales en perspective et en élévation de l'élément de boîtier illustré sur la figure 1,
- la figure 4 est une vue latérale en perspective de dessous de l'élément de boîtier illustré sur les figures 1 à 3,
- la figure 5 est une vue en perspective arrière de dessous de l'élément de boîtier illustré sur les figures 1 à 4, avec le cordon d'alimentation électrique,
- la figure 6 est une vue partielle en perspective de dessous de l'élément de boîtier illustré sur les figures 1 à 5.

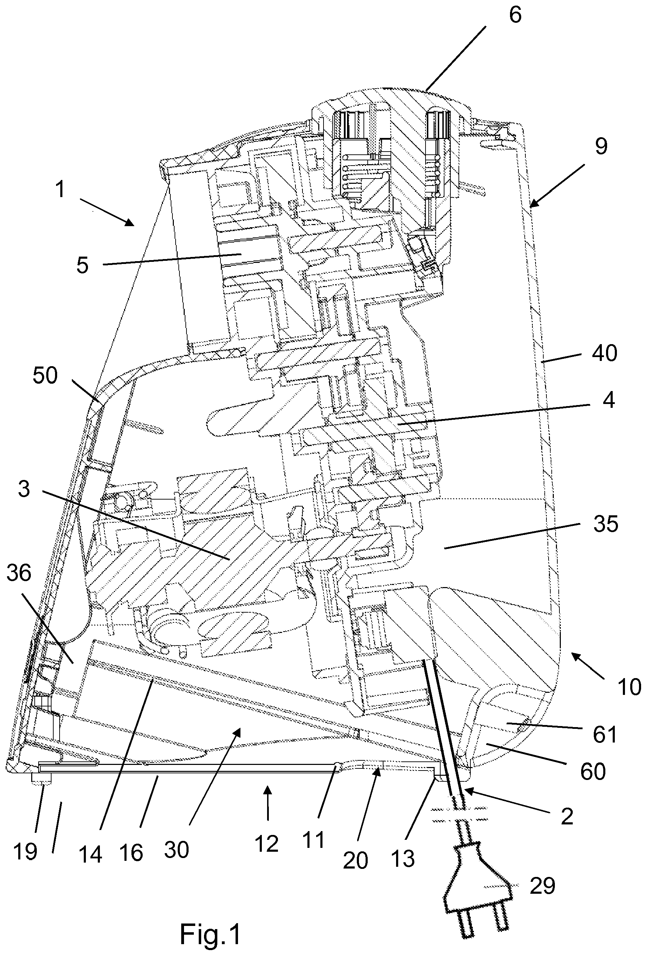

L'appareil électroménager illustré sur la figure 1 comporte un boîtier 1 présentant une enveloppe extérieure 9, et un cordon d'alimentation électrique 2 présentant une portion s'étendant hors de l'enveloppe extérieure 9. Le cordon d'alimentation électrique 2 est monté dans le boîtier 1. Le cordon d'alimentation électrique 2 présente une extrémité montée dans le boîtier 1 et une autre extrémité comportant une prise électrique 29, prévue par exemple pour un branchement sur le secteur. Pour simplifier les figures, le câblage électrique à l'intérieur du boîtier 1 n'est pas représenté.

Un espace interne 30 de rangement est agencé à l'intérieur du boîtier 1 pour loger au moins partiellement la portion du cordon d'alimentation électrique 2 s'étendant hors de l'enveloppe extérieure 9.

L'appareil électroménager illustré sur la figure 1 est un appareil électroménager de préparation culinaire, dans lequel le boîtier 1 loge un moteur électrique 3 accouplé à un dispositif de transmission 4 présentant une sortie d'entraînement 5. Le dispositif de transmission 4 peut notamment comporter un réducteur. Le boîtier 1 présente un bouton de commande 6 pour piloter le fonctionnement du moteur électrique 3. Le boîtier 1 peut porter un accessoire de travail (non représenté) comprenant un outil de travail entrainé en rotation par la sortie d'entraînement 5.

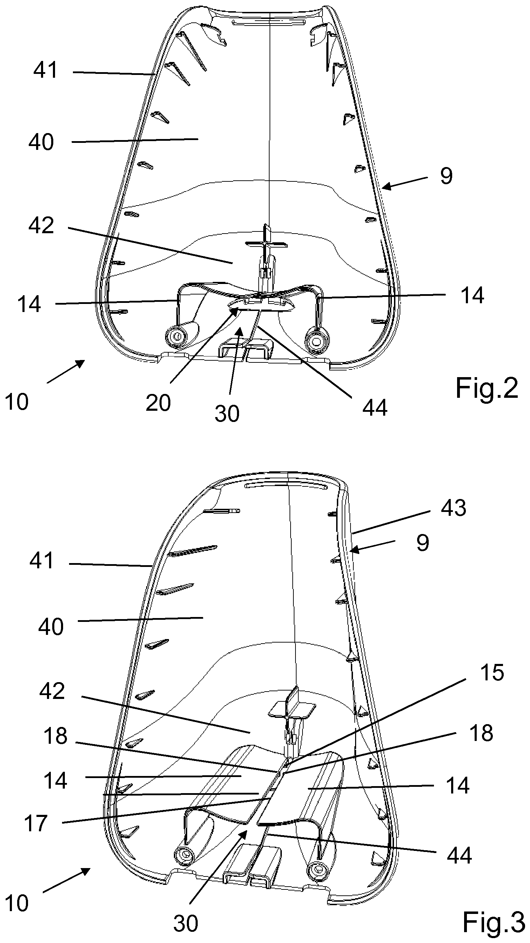

Le boîtier 1 comprend un élément de boîtier 10 formant une partie de l'enveloppe extérieure 9, représenté également sur les figures 2 à 6. L'élément de boîtier 10 comporte un passage de sortie 20 par lequel le cordon d'alimentation électrique 2 sort librement du boîtier 1. La plus grande section du cordon d'alimentation électrique 2 est plus petite que la plus petite section du passage de sortie 20, et de préférence au moins deux fois plus petite que la plus petite section du passage de sortie 20.

Selon une caractéristique de l'exemple de réalisation illustré sur les figures, le passage de sortie 20 est agencé sous une face inférieure d'appui 12 de l'élément de boîtier 10. Tel que mieux visible sur la figure 1, le passage de sortie 20 est agencé entre des pieds d'appui 13 ; 19 du boîtier 1, au moins un des pieds d'appui 13 appartenant à l'élément de boîtier 10.

Selon une autre caractéristique de l'exemple de réalisation illustré sur les figures, la plus petite section du passage de sortie 20 est supérieure à l'épaisseur d'une paroi externe 11 de l'élément de boîtier 10 séparant l'espace interne 30 de l'enveloppe extérieure 9 et s'étendant jusqu'au passage de sortie 20. Tel que bien visible sur la figure 1, l'espace interne 30 s'étend à partir du passage de sortie 20 dans une direction principalement parallèle à l'enveloppe extérieure 9. En d'autres termes, l'angle entre la direction principale d'extension de l'espace interne 30 et l'enveloppe extérieure 9 adjacente au passage de sortie 20 n'est pas nécessairement nul mais peut être inférieur à 45°. Dans l'exemple de réalisation illustré sur les figures, cet angle est d'environ 15°.

Tel que visible sur les figures 1 à 3, l'élément de boîtier 10 comporte au moins une paroi interne 14 délimitant partiellement l'espace interne 30. Plus particulièrement dans l'exemple de réalisation illustré sur les figures, l'élément de boîtier 10 comporte deux parois internes 14 s'étendant à partir de la face interne de l'enveloppe extérieure 9. Les parois internes 14 s'étendent au dessus du passage de sortie 20.

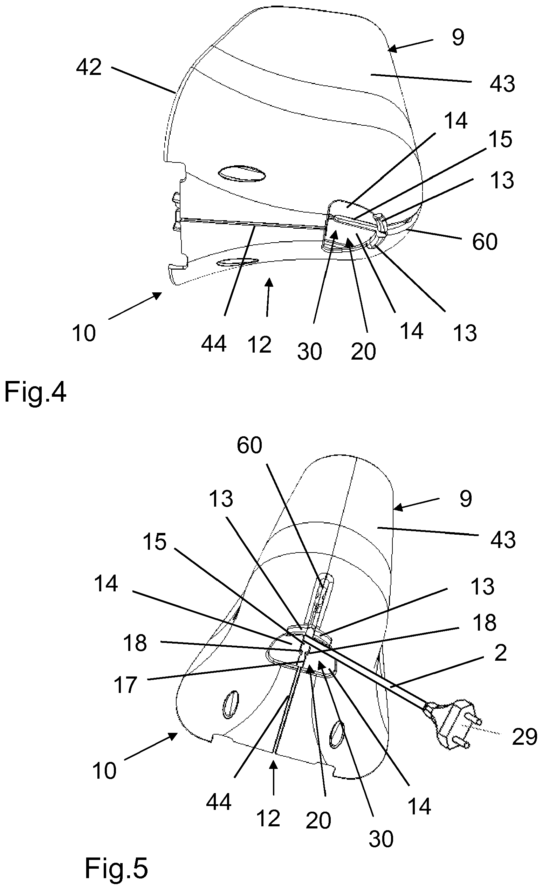

Tel que visible sur les figures 1 et 5, le cordon d'alimentation électrique 2 est retenu par l'élément de boîtier 10 en regard du passage de sortie 20. Plus particulièrement dans l'exemple de réalisation illustré sur les figures, les deux parois internes 14 sont séparées par une fente interne 17, mieux visible sur la figure 3, prévue pour le passage du cordon d'alimentation électrique 2 lors du montage de l'appareil. Les parois internes 14 ménagent un passage interne 15 pour le cordon d'alimentation électrique 2 vers un compartiment principal 35 du boîtier 1. La section du passage de sortie 20 est supérieure à la section du passage interne 15. La fente interne 17 comporte deux ergots internes 18 disposés en regard du passage de sortie 20 pour bloquer le cordon d'alimentation électrique 2. Les ergots internes 18 limitent le passage interne 15 pour le cordon d'alimentation électrique 2.

Le compartiment principal 35 loge le moteur électrique 3 et le dispositif de transmission 4. Le compartiment principal 35 est séparé de l'espace interne 30 par les parois internes 14. L'espace interne 30 forme ainsi un compartiment secondaire pour le rangement du cordon d'alimentation électrique 2. Le compartiment secondaire n'est pas nécessairement entièrement séparé du compartiment principal 35, par exemple pour permettre la ventilation du moteur électrique 3. A cet effet, l'espace interne 30 communique par au moins un passage intermédiaire 36 avec le compartiment principal 35 agencé dans le boîtier 1 et logeant le moteur électrique 3. La face inférieure d'appui 12 comporte au moins une échancrure latérale 16 mettant en communication le passage de sortie 20 avec l'extérieur lorsque la face inférieure d'appui 12 repose sur un plan d'appui. Le passage de sortie 20 peut ainsi servir également d'orifice de ventilation pour le moteur électrique 3. Dans l'exemple de réalisation illustré sur les figures, l'échancrure latérale 16 est ménagée entre les pieds d'appui 13, 19.

Tel que visible sur les figures 1 à 6, l'élément de boîtier 10 forme une coque 40 logeant au moins partiellement l'espace interne 30. Tel que mieux visible sur les figures 2 et 3, la coque 40 présente un bord latéral 41 délimitant une cavité interne 42. Tel que visible sur la figure 1, la coque 40 est assemblée avec une façade 50 logeant la sortie d'entraînement 5. La façade 50 peut comporter au moins un pied d'appui 19. La face inférieure d'appui 12 appartient à une face externe 43 de la coque 40. La face inférieure d'appui 12 présente une fente externe 44 reliant le bord latéral 41 au passage de sortie 20, prévue pour le passage du cordon d'alimentation électrique 2 lors du montage de l'appareil.

Tel que mieux visible sur les figures 2 et 3, les parois internes 14 sont agencées à l'intérieur de la cavité interne 42. L'espace interne 30 débouche en regard de l'ouverture de la cavité interne 42 délimitée par le bord latéral 41.

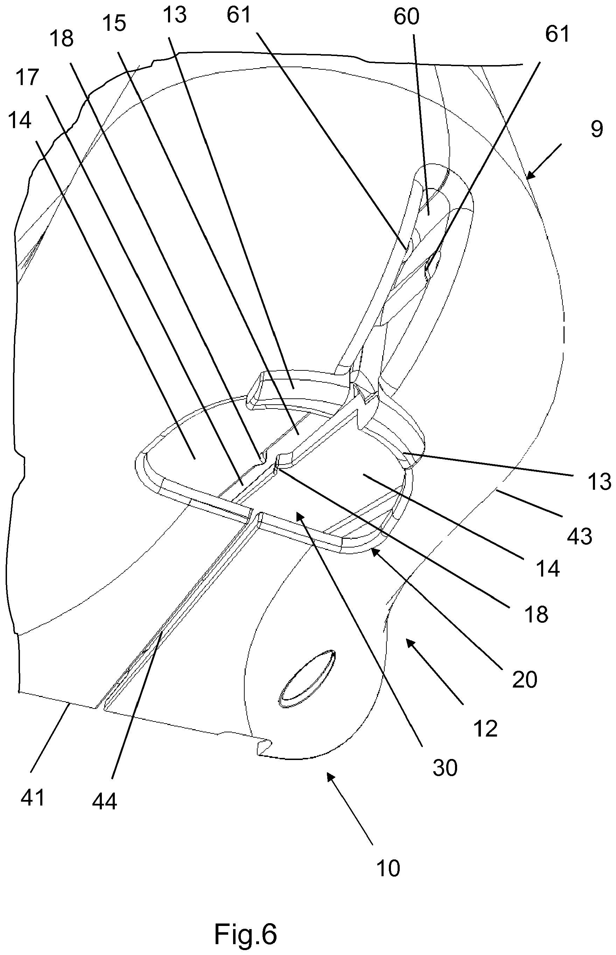

Tel que mieux visible sur la figure 6, l'élément de boîtier 10 comporte une rainure externe de coincement 60 pour maintenir le cordon d'alimentation électrique 2. La rainure externe de coincement 60 comporte au moins une portion présentant une section correspondant à la plus petite section du cordon d'alimentation électrique 2. Dans l'exemple de réalisation illustré sur les figures, la rainure externe de coincement 60 comporte deux bossages internes 61 agencés de manière opposée et ménageant un interstice correspondant à la plus petite section du cordon d'alimentation électrique 2. La rainure externe de coincement 60 s'étend hors de la face inférieure d'appui 12 de l'élément de boîtier 10. La rainure externe de coincement 60 est ménagée dans l'enveloppe extérieure 9 dans la partie inférieure du boîtier 1. Pour faciliter le passage du cordon d'alimentation électrique 2, la rainure externe de coincement 60 débouche dans le passage de sortie 20. Pour faciliter la sortie du cordon d'alimentation électrique 2, la rainure externe de coincement 60 est agencée à l'opposé de l'espace interne 30. La rainure externe de coincement 60 s'étend entre deux pieds d'appui 13 de l'élément de boîtier 10.

L'appareil électroménager selon l'invention illustré sur les figures 1 à 6 fonctionne et s'utilise de la manière suivante.

L'utilisateur peut ranger une partie du cordon d'alimentation électrique 2 dans l'espace interne 30 en soulevant le boîtier 1 de l'appareil et en repoussant à l'intérieur du boîtier 1 dans la direction principale d'extension de l'espace interne 30 la portion du cordon d'alimentation électrique 2 sortant par le passage de sortie 20. L'ouverture importante ménagée par le passage de sortie 20 en comparaison avec la section du cordon d'alimentation électrique 2 facilite l'introduction du cordon d'alimentation électrique 2 dans l'espace interne 30.

L'utilisateur peut ensuite insérer la portion du cordon d'alimentation électrique 2 sortant du passage de sortie 20 dans la rainure externe de coincement 60. Le cordon d'alimentation électrique 2 s'étend alors hors de l'enveloppe extérieure 9 du boîtier 1 par l'extrémité de la rainure externe de coincement 60 opposée à l'espace interne 30. Dans l'exemple de réalisation illustré sur les figures, cette configuration correspond à la face arrière du boîtier 1 opposée à la façade 50.

A titre de variante, le boîtier 1 ne loge pas nécessairement un moteur électrique 3. L'invention peut notamment être appliquée à un appareil électroménager chauffant, par exemple à une yaourtière.

A titre de variante, l'espace interne 30 pourrait être délimité par au moins une paroi interne 14 appartenant à l'élément de boîtier 10. En complément ou en alternative, l'espace interne 30 pourrait être délimité par au moins une paroi interne n'appartenant pas à l'élément de boîtier 10.

A titre de variante, l'élément de boîtier 10 ne forme pas nécessairement une coque 40. L'élément de boîtier 10 peut notamment former un socle ou encore une paroi latérale du boîtier 1.

A titre de variante, la rainure externe de coincement 60 peut s'étendre au moins partiellement hors de la face inférieure d'appui 12 de l'élément de boîtier 10.

La présente invention n'est nullement limitée à l'exemple de réalisation décrit et à ses variantes, mais englobe de nombreuses modifications dans le cadre des revendications.

## Revendications

1. Appareil électroménager, notamment appareil électroménager de préparation culinaire, comportant un boîtier (1) présentant une enveloppe extérieure (9), un cordon d'alimentation électrique (2) monté dans le boîtier (1) et présentant une portion s'étendant hors de l'enveloppe extérieure (9), un espace interne (30) de rangement étant agencé à l'intérieur du boîtier (1) pour loger au moins partiellement la portion du cordon d'alimentation électrique (2) s'étendant hors de l'enveloppe extérieure (9), le boîtier (1) comprenant un élément de boîtier (10) formant une partie de l'enveloppe extérieure (9), l'élément de boîtier (10) comportant un passage de sortie (20) par lequel le cordon d'alimentation électrique (2) sort librement du boîtier (1), **caractérisé en ce que** le passage de sortie (20) est agencé sous une face inférieure d'appui (12) de l'élément de boîtier (10), **en ce que** la face inférieure d'appui (12) comporte au moins une échancrure latérale (16) mettant en communication le passage de sortie (20) avec l'extérieur lorsque la face inférieure d'appui (12) repose sur un plan d'appui, et **en ce que** l'espace interne (30) communique par au moins un passage intermédiaire (36) avec un compartiment principal (35) agencé dans le boîtier (1) et logeant un moteur électrique (3).

2. Appareil électroménager de préparation culinaire selon la revendication 1, **caractérisé en ce que** la plus petite section du passage de sortie (20) est supérieure à l'épaisseur d'une paroi externe (11) de l'élément de boîtier (10) séparant l'espace interne (30) de l'enveloppe extérieure (9) et s'étendant jusqu'au passage de sortie (20), et **en ce que** l'espace interne (30) s'étend à partir du passage de sortie (20) dans une direction principalement parallèle à l'enveloppe extérieure (9).

3. Appareil électroménager de préparation culinaire selon l'une des revendications 1 ou 2, **caractérisé en ce que** le passage de sortie (20) est agencé entre des pieds d'appui (13 ; 19) du boîtier (1).

4. Appareil électroménager de préparation culinaire selon l'une des revendications 1 à 3, **caractérisé en ce que** le cordon d'alimentation électrique (2) est retenu par l'élément de boîtier (10) en regard du passage de sortie (20).

5. Appareil électroménager de préparation culinaire selon l'une des revendications 1 à 4, **caractérisé en ce que** l'élément de boîtier (10) comporte au moins une paroi interne (14) délimitant partiellement l'espace interne (30).

6. Appareil électroménager de préparation culinaire selon la revendication 5, **caractérisé en ce que** la ou les paroi(s) interne(s) (14) s'étend(ent) au dessus du passage de sortie (20).

7. Appareil électroménager de préparation culinaire selon l'une des revendications 5 ou 6, **caractérisé en ce que** la ou les paroi(s) interne(s) (14) ménage(nt) un passage interne (15) pour le cordon d'alimentation électrique (2).

8. Appareil électroménager de préparation culinaire selon la revendication 7, **caractérisé en ce que** la section du passage de sortie (20) est supérieure à la section du passage interne (15).

9. Appareil électroménager de préparation culinaire selon l'une des revendications 1 à 8, **caractérisé en ce que** l'élément de boîtier (10) forme une coque (40) logeant au moins partiellement l'espace interne (30).

10. Appareil électroménager de préparation culinaire selon la revendication 9, **caractérisé en ce que** la coque (40) présente un bord latéral (41) délimitant une cavité interne (42) et **en ce que** la face inférieure d'appui (12) appartient à une face externe (43) de la coque (40).

11. Appareil électroménager de préparation culinaire selon la revendication 10 lorsque dépendant de l'une des revendications 5 à 8, **caractérisé en ce que** la ou les paroi(s) interne(s) (14) est/sont agencée(s) à l'intérieur de la cavité interne (42) et **en ce que** l'espace interne (30) débouche en regard de l'ouverture de la cavité interne (42) délimitée par le bord latéral (41).

12. Appareil électroménager de préparation culinaire selon l'une des revendications 1 à 11, **caractérisé en ce que** l'élément de boîtier (10) comporte une rainure externe de coincement (60) pour maintenir le cordon d'alimentation électrique (2).

13. Appareil électroménager de préparation culinaire selon la revendication 12, **caractérisé en ce que** la rainure externe de coincement (60) s'étend au moins partiellement hors de la face inférieure d'appui (12) de l'élément de boîtier (10).

14. Appareil électroménager de préparation culinaire selon l'une des revendications 12 ou 13, **caractérisé en ce que** la rainure externe de coincement (60) débouche dans le passage de sortie (20).

15. Appareil électroménager de préparation culinaire selon l'une des revendications 12 à 14, **caractérisé en ce que** la rainure externe de coincement (60) est agencée à l'opposé de l'espace interne (30).

## Patentansprüche

1. Elektrisches Haushaltsgerät, insbesondere elektrisches Haushaltsgerät zur Nahrungsmittelzubereitung, aufweisend ein Gehäuse (1), das eine Außenhülle (9) vorweist, ein Stromversorgungskabel (2), das in das Gehäuse (1) montiert ist und einen Abschnitt vorweist, der sich außerhalb der Außenhülle (9) erstreckt, wobei ein interner Stauraum (30) im Inneren des Gehäuses (1) angeordnet ist, um den Abschnitt des Stromversorgungskabels (2), der sich aus der Außenhülle (9) heraus erstreckt, zumindest teilweise aufzunehmen, wobei das Gehäuse (1) ein Gehäuseelement (10) umfasst, das einen Teil der Außenhülle (9) bildet, wobei das Gehäuseelement (10) einen Ausgangsdurchgang (20) aufweist, durch den das Stromversorgungskabel (2) frei aus dem Gehäuse (1) austritt, **dadurch gekennzeichnet, dass** der Ausgangsdurchgang (20) unter einer unteren Stützfläche (12) des Gehäuseelements (10) angeordnet ist, dass die untere Stützfläche (12) mindestens eine seitliche Kerbe (16) aufweist, die den Ausgangsdurchgang (20) mit dem Äußeren in Verbindung bringt, wenn die untere Stützfläche (12) auf einer Stützebene ruht, und dass der Innenraum (30) durch mindestens einen Zwischendurchgang (36) mit einem Hauptfach (35) verbunden ist, das in dem Gehäuse (1) angeordnet ist und einen Elektromotor (3) aufnimmt.

2. Elektrisches Haushaltsgerät zur Nahrungsmittelzubereitung nach Anspruch 1, **dadurch gekennzeichnet, dass** der kleinste Querschnitt des Ausgangsdurchgangs (20) größer als die Dicke einer Außenwand (11) des Gehäuseelements (10) ist, die den Innenraum (30) von der Außenhülle (9) trennt und sich bis zu dem Ausgangsdurchgang (20) erstreckt, und dass sich der Innenraum (30) von dem Ausgangsdurchgang (20) in einer Richtung hauptsächlich parallel zu der Außenhülle (9) erstreckt.

3. Elektrisches Haushaltsgerät zur Nahrungsmittelzubereitung nach einem der Ansprüche 1 bis 2, **dadurch gekennzeichnet, dass** der Ausgangsdurchgang (20) zwischen Stützfüßen (13; 19) des Gehäuses (1) angeordnet ist.

4. Elektrisches Haushaltsgerät zur Nahrungsmittelzubereitung nach einem der Ansprüche 1 bis 3, **dadurch gekennzeichnet, dass** das Stromversorgungskabel (2) durch das Gehäuseelement (10) gegenüber dem Ausgangsdurchgang (20) zurückgehalten wird.

5. Elektrisches Haushaltsgerät zur Nahrungsmittelzubereitung nach einem der Ansprüche 1 bis 4, **dadurch gekennzeichnet, dass** das Gehäuseelement (10) mindestens eine Innenwand (14) umfasst, die den Innenraum (30) teilweise begrenzt.

6. Elektrisches Haushaltsgerät zur Nahrungsmittelzubereitung nach Anspruch 5, **dadurch gekennzeichnet, dass** sich die Innenwand/-wände (14) über den Ausgangsdurchgang (20) erstreckt / erstrecken.

7. Elektrisches Haushaltsgerät zur Nahrungsmittelzubereitung nach einem der Ansprüche 5 oder 6, **dadurch gekennzeichnet, dass** die Innenwand/-wände (14) einen inneren Durchgang (15) für das Stromkabel (2) aufnimmt/aufnehmen.

8. Elektrisches Haushaltsgerät zur Nahrungsmittelzubereitung nach Anspruch 7, **dadurch gekennzeichnet, dass** der Querschnitt des Ausgangsdurchgangs (20) größer ist als der Querschnitt des inneren Kanals (15).

9. Elektrisches Haushaltsgerät zur Nahrungsmittelzubereitung nach einem der Ansprüche 1 bis 8, **dadurch gekennzeichnet, dass** das Gehäuseelement (10) eine Schale (40) bildet, die den Innenraum (30) zumindest teilweise aufnimmt.

10. Elektrisches Haushaltsgerät zur Nahrungsmittelzubereitung nach Anspruch 9, **dadurch gekennzeichnet, dass** die Schale (40) eine Seitenkante (41) vorweist, die einen inneren Hohlraum (42) begrenzt, und dass die untere Stützfläche (12) zu einer Außenfläche (43) der Schale (40) gehört.

11. Elektrisches Haushaltsgerät zur Nahrungsmittelzubereitung nach Anspruch 10 in Abhängigkeit von einem der Ansprüche 5 bis 8, **dadurch gekennzeichnet, dass** die Innenwand/-wände (14) im Inneren des inneren Hohlraums (42) angeordnet ist/sind, und dass der Innenraum (30) gegenüber der durch die Seitenkante (41) begrenzten Öffnung des Innenraums (42) mündet.

12. Elektrisches Haushaltsgerät zur Nahrungsmittelzubereitung nach einem der Ansprüche 1 bis 11, **dadurch gekennzeichnet, dass** das Gehäuseelement (10) eine externe Klemmnut (60) zum Halten des Stromversorgungskabels (2) aufweist.

13. Elektrisches Haushaltsgerät zur Nahrungsmittelzubereitung nach Anspruch 12, **dadurch gekennzeichnet, dass** sich die äußere Klemmnut (60) zumindest teilweise außerhalb der unteren Stützfläche (12) des Gehäuseelements (10) erstreckt.

14. Elektrisches Haushaltsgerät zur Nahrungsmittelzubereitung nach einem der Ansprüche 12 oder 13, **dadurch gekennzeichnet, dass** die äußere Klemmnut (60) in dem Ausgangsdurchgang (20) mündet.

15. Elektrisches Haushaltsgerät zur Nahrungsmittelzubereitung nach einem der Ansprüche 12 bis 14, **dadurch gekennzeichnet, dass** die äußere Klemmnut (60) gegenüber dem Innenraum (30) angeordnet ist.

## Claims

1. Household appliance, in particular an electrical kitchen appliance, comprising a housing (1) and an outer shell (9), a power cord (2) mounted in the housing (1) and having a portion extending outside of the outer shell (9), an internal storage space (30) being arranged inside the housing (1) to house at least partially the portion of the power cord (2) extending outside of the outer shell (9), the housing (1) comprising a housing element (10) forming a part of the outer shell (9), the housing element (10) comprising an outlet passage (20) through which the power cord (2) exits freely from the housing (1), **characterised in that** the outlet passage (20) is arranged under a lower support face (12) of the housing element (10), **in that** the lower support face (12) comprises at least one side indentation (16) connecting the outlet passage (20) with the exterior when the lower support face (12) rests on a support plane, and **in that** the internal space (30) communicates through at least one intermediate passage (36) with a main compartment (35) arranged in the housing (1) and housing an electric motor (3).

2. Electrical kitchen appliance according to claim 1, **characterised in that** the smallest section of the outlet passage (20) is larger than the thickness of an outer wall (11) of the housing element (10) separating the internal space (30) of the outer shell (9) and extending until the outlet passage (20), and **in that** the internal space (30) extends from the outlet passage (20) in a direction mainly parallel to the outer shell (9).

3. Electrical kitchen appliance according to one of claims 1 or 2, **characterised in that** the outlet passage (20) is arranged between support feet (13; 19) of the housing (1).

4. Electrical kitchen appliance according to one of claims 1 to 3, **characterised in that** the power cord (2) is retained by the housing element (10) facing the outlet passage (20).

5. Electrical kitchen appliance according to one of claims 1 to 4, **characterised in that** the housing element (10) comprises at least one internal wall (14) partially delimiting the internal space (30).

6. Electrical kitchen appliance according to claim 5, **characterised in that** the internal wall(s) (14) extend(s) above the outlet passage (20).

7. Electrical kitchen appliance according to one of claims 5 or 6, **characterised in that** the internal wall(s) (14) arrange(s) an internal passage (15) for the power cord (2).

8. Electrical kitchen appliance according to claim 7, **characterised in that** the section of the outlet passage (20) is larger than the section of the internal passage (15).

9. Electrical kitchen appliance according to one of claims 1 to 8, **characterised in that** housing element (10) forms a shell (40) housing at least partially the internal space (30).

10. Electrical kitchen appliance according to claim 9, **characterised in that** the shell (40) has a side edge (41) delimiting an internal cavity (42) and **in that** the lower support face (12) belongs to an external face (43) of the shell (40).

11. Electrical kitchen appliance according to claim 10, when dependent on one of claims 5 to 8, **characterised in that** the internal wall(s) (14) is/are arranged inside the internal cavity (42) and **in that** the internal space (30) opens out facing the opening of the internal cavity (42) delimited by the side edge (41).

12. Electrical kitchen appliance according to one of claims 1 to 11, **characterised in that** the housing element (10) comprises an external wedging groove (60) to hold the power cord (2).

13. Electrical kitchen appliance according to claim 12, **characterised in that** the external wedging groove (60) extends at least partially outside of the lower support face (12) of the housing element (10).

14. Electrical kitchen appliance according to one of claims 12 or 13, **characterised in that** the external wedging groove (60) opens out into the outlet passage (20).

15. Electrical kitchen appliance according to one of claims 12 to 14, **characterised in that** the external wedging groove (60) is arranged opposite the internal space (30).
